# EUROPEAN PATENT SPECIFICATION

(11) **EP 0 702 883 B1**
(45) Date of publication and mention of the grant of the patent: **11.06.2003**
(21) Application number: 95914628.3
(22) Date of filing: 21.03.1995
(51) Int. Cl.: H04Q 7/24

(54) **INTELLIGENT MOBILE TELECOMMUNICATIONS NETWORK ARRANGEMENT**
ANORDNUNG EINES INTELLIGENTEN MOBILEN TELEKOMMUNIKATIONSNETZWERKES
CONFIGURATION DE RESEAUX DE TELECOMMUNICATION INTELLIGENTS ET MOBILES

(30) Priority: 22.03.1994 SE 9400967
(43) Date of publication of application: 27.03.1996
(73) Proprietor: TELEFONAKTIEBOLAGET LM ERICSSON, 126 25 Stockholm (SE)
(72) Inventor: VAINIOMÄKI, Hannu, S-135 42 Tyresö (SE); LARSSON, Thomas, S-141 70 Huddinge (SE); PANCORBO, Belen, E-28020 Madrid (ES); URBANUS, Frankk, N-4902 PV Oosterhout (NL); KARLSSON, Nils, D-52134 Herzogenrath (DE); PONS, José, D-52134 Aachen (DE)
(74) Representative: Hammond, Andrew
(86) International application number: SE9500294
(87) International publication number: WO95026114

(56) References cited:
- EP-A- 0 466 078
- WO-A-93/18606

## Description

### TECHNICAL FIELD

The present invention relates to an intelligent mobile telecommunications Network arrangement providing services comprising means for providing communication within the Mobile and Intelligent Networks respectively and between at least one logical node of the Intelligent network and at least one logical node of the Mobile Network, said means comprising first intra-connecting means (X-MAP) providing communication between a first logical node, and a second logical node of the Mobile Network.

The invention further relates to a method for providing services such as e.g. Personal Communications Services in a Mobile Intelligent Network.

More generally the invention can be said to relate to intelligent networks in a mobile environment or a mobile application of intelligent networks. Generally within telephony and particularly within mobile telephony the need for more and more advanced services or products is rapidly increasing and products and services are wanted which are more advanced and even not yet defined by the basic network standards. There is a pressure that telecommunications become more and more personal, i.e. personalized in a number of different fields. The interest in so called Intelligent Networks has become substantial but the combination with mobility or Mobile Networks is complicated and a number of Intelligent Network Services are not available to mobile subscribers and others are not available in an appropriate or in the best way at the same time as mobility is provided. Essential is that for Mobile Intelligent Networks the location of the calling subscriber cannot be concluded from the calling subscriber number as is the case for fixed subscribers. On the contrary, the subscriber could be anywhere. It is furthermore essential that the location of the called subscriber cannot be concluded from the called subscriber number.

### STATE OF THE ART

According to the ITU-T intelligent network recommendations, the Capability Set 1, CS 1, Service Independent Building blocks, SIBs give a flexible service configuration since the concept of the intelligent network opens the interface between the Service Switching Functions, SSF, and the Service Control Functions, SCF. Earlier those were integrated internally in the switching systems. Depending on the particular support data such as for example the screening list, the call instance data it was acting on, such as e.g. calling party number, and its immanent logic such as e.g. to screen a number, the SIB behaves in different ways. With the SIB logic a controlling relationship can be established between the node that holds a Service Control Function, the Service Control Point, SCP, and the node that holds the Service Switching Functions, the Service Switching Point, SSP. For example a Specialized Resource Function, SRF, can be invoked if user interaction is acquired, e.g. collect digits. This function as well as others may be stand alone as an Intelligent Peripheral, IP, or it may be integrated in the Service Switching Point, SSP. Communications are provided by applying the functionality which is provided by the Intelligent Network Application Part Protocol, INAP. The signalling is carried out according to the CCITT-signalling system No. 7.

Also the European Telecommunications Standards Institute has elaborated an implementable intelligent network protocol which is called ETSI-Core INAP.

Following the above mentioned standards a number of operations can be carried out. However, a number of operators run Intelligent Networks essentially based on supplier specific solutions.

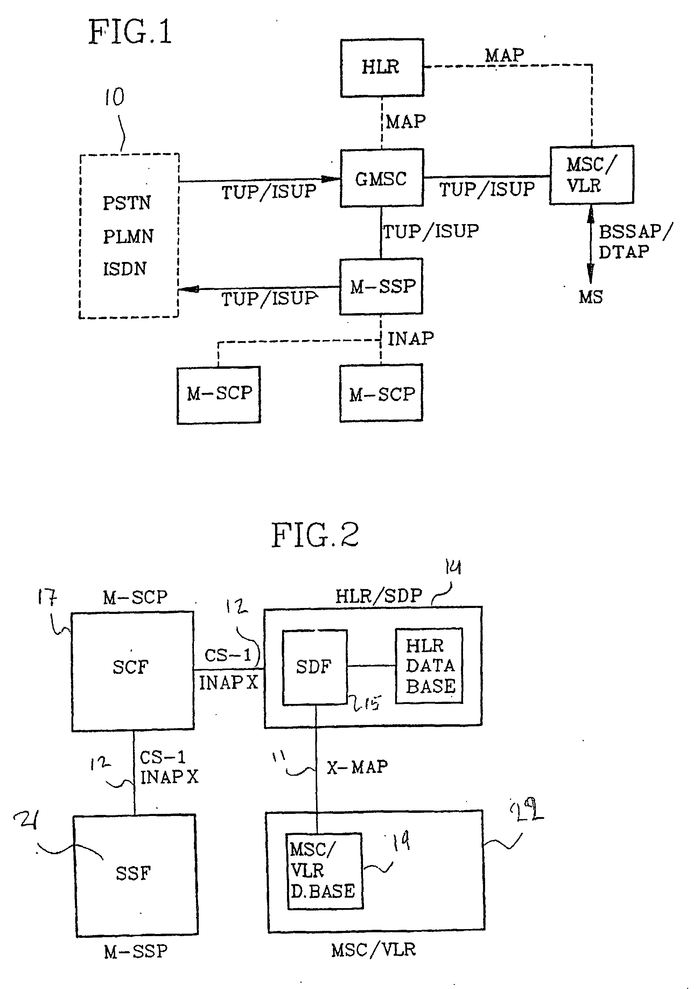

Fig. 1 describes a network configuration for Mobile Intelligent Network Services in GSM 900/DCS 1800. The GSM-system as specified by the ETSI-standards comprises among others the following nodes: Home Location Register, HLR, Mobile Switching Centre, MSC, Visitor Location Register, VLR and the Base Station System, BSS and the Intelligent Network is specified by ITU-T in the Q.1200 series Recommendations and by ETSI in the Intelligent Network (IN); Intelligent Network Capability Set 1 (CSI), Core Intelligent Network Application Protocol (INAP) ETS 300374 standard (DE/SPS-3015 recommendations) and comprises among others the following nodes: Service Switching Point, SSP, Services Control Point, SCP, and Service Data Point, SDP. The network configuration is illustrated in Fig. 1 and corresponds to a dedicated overlay Intelligent Network for mobile subscribers. Generally a combination of M-SSP and a M-SCP. i.e. a M-SSCP or Mobile Service Node is used by the operators which apply the Intelligent Network. Access to Mobile Intelligent Network Services is provided to the subscribers which have been given an Intelligent Network access category in the Home Location Register, HLR. This category can be split into one category for calls to a mobile subscriber and another category for calls from the mobile subscriber. The last category is also transferred to the Visitor Location Register, VLR, if the mobile subscriber changes the area which is covered by a Visitor Location Register, VLR, i.e. location updating. Special outgoing routes to the M-SSP are defined in the gateway and the visited Mobile Switching Centres, G/MSC, which are selected if the triggering criteria are met. The calling party number and the called party number but also the location of the calling party is provided to the M-SSP and forwarded to the Mobile Service Control Point, M-SCP. The accessed mobile Intelligent Network services must have been previously created and activated in the Mobile Service Control Point, M-SCP, with the use of the Service Creation Environment Function, SCEF, which is built on top of the Operation and Maintenance System, OMS. This is however not shown in the figure. In fig. 1 which is an overlay network a continuous line relates to a bearer connection whereas a dashed line relates to signalling (signalling system No. 7). ISUP denotes the Integrated Services User Part and TUP denotes the Telephone User Part.

If a call is re-routed from the Intelligent Network to the Mobile Network, it is possible to indicate that no announcement shall be given to the calling subscriber in the Mobile Network in case the called mobile subscriber is not reachable. Therethrough the IN can get control back over the call and execute the adequate action depending on the service allocated to the subscriber in the IN.

In 41 IEEE Vehicular Technology Conference (May 19-22, 1991, St. Louis, MO) Akihisa Nakajima et al, "Intelligent Digital Mobile Communications Network Architecture for Universal Personal Telecommunications (UPT) Services, pp 83-87, an Intelligent Digital Mobile Communications Network, "IDMN", architecture is illustrated. The network described therein is divided into two layers, a transport layer for transportation of user information and an intelligent layer controlling services. GATE-MSC (G-MSC) is included in the transport layer as well as the V-MSC since they provide communication parts and the Home Location Register, HLR, is included in the intelligent layer. Both the intelligent layer and the transport layer are hierarchical and subdivided into two levels.

WO 93/18606 describes an integrated wired and wireless communication network. It is intended to provide mobility using the intelligent network IN wherein the IN nodes act as mobile network nodes. A mobile specific protocol (IS-41) is used between network nodes, and it is intended to achieve mobile functionality via the IN. The fetching of data from PLMN always relates to incoming calls and a substantially normal interface can be said to be provided between entities of the cellular network. The invention described in this document merely relates to Personal Communications Service (PCS) and not to similar (service data) functionality which cannot be achieved through the teaching of this document.

EP-A-0466078 is concerned with providing a completely new cellular network structure wherein the intelligent network kind of functionality is integrated into different network nodes.

Thus, none of the shown intelligent Mobile Network architectures will take into consideration that the Intelligent Network service subscriber is really mobile or on the move in a number of the Intelligent Network Services which are suggested by e.g. the Capability Set 1. Thus they are not really adapted for mobile subscribers. Therefore, a number of requirements cannot be fulfilled e.g. as to the reachability of the subscriber, information on the subscribers location, e t c, and several sophisticated and demanding personalized services cannot be provided.

### SUMMARY OF THE INVENTION

It is an object of the present invention to provide a network arrangement as initially referred to in which, particularly for mobile subscribers, services can be provided which are sophisticated, personalized and differentiated. Particularly it is an object of the invention to provide an arrangement with which products and services can be offered and provided which are more elaborate and extend beyond what has been possible with basic network standards. It is an object of the present invention to enable the Intelligent Network to provide services specific for mobile subscribers, e.g. mobile GSM subscribers but also others. It is furthermore an object of the present invention to personalize the services and to provide for a greater variety of services particularly for mobile subscribers. The network arrangement according to the invention particularly enables for mobile subscribers to communicate in such a way that the probability of success is high, with a high availability, i.e. at any convenient time, e t c, in such a way that e.g. specialized personal services such as e.g. Personal Communication Services are available to the mobile subscriber. This means that it is a particular object of the invention that transfer of information is possible at any time.

It is particularly an object of the invention to allow the implementation of advanced IN Services in a Service Control Point, SCP. It is also an embodiment of the invention to offer the possibility of interface to other networks/vendors that request mobile specific data.

These as well as other objects are achieved with a network arrangement wherein the means for providing communication further comprises first interconnecting means (INAPX;INAPX') separate from said intraconnecting means for providing communication between a logical node of the Mobile Network (an MN-node) and a first logical node of the Intelligent Network or a so called IN-node.

A method and system for providing Intelligent Network services in a Mobile Network as initially referred to comprises the steps according to claim 27 and the means according to claim 1.

Advantageous embodiments of the invention are given by the appended subclaims.

For example the first intraconnecting means advantageously comprises a first signalling protocol providing communication between a first and a second node of the mobile network, the first signalling protocol comprising an extended mobile application part. The first interconnecting means comprises advantageously an intelligent network application part.

Moreover, advantageously the first and the second logical Mobile Network nodes comprise a Home Location Register and a Mobile Switching Center/Visitor Location Register respectively.

Particularly the first interconnecting means connects the first logical IN-node, which may be a Service Control Point with the first logical MN-node, e.g. the Home Location Register. Alternatively it may interconnect the first logical IN-node with (at least) the second logical MN-node, i.e. MSC/VLR.

Particularly the first extended interconnecting means also provides for signalling between a first and a second logical IN-node, e.g. a Service Control Point and a Service Switching Point.

Particularly a telecommunications system is provided which comprises a cellular mobile network and an intelligent network. Wherein communication is provided between at least one logical node of the mobile network and at least one logical node of the intelligent network. Means for providing communication between the nodes of the mobile and intelligent networks respectively comprises a second signalling protocol interconnecting a service switching point with a first logical node of the mobile network which node forms a service data point to the intelligent network so that data can be transferred at substantially any time between the mobile network and the intelligent network.

More particularly still the first logical node of the mobile network is a Home Location Register and the first intra-connecting means provides communication between the Home Location Register and a Mobile Switching Center/Visitor Location Register of the mobile network. The first intraconnecting means are separate from the first inter-connecting means.

### BRIEF DESCRIPTION OF THE DRAWINGS

The invention will in the following be further described under reference to the accompanying drawings in which
- Fig. 2: illustrates one way for the (Mobile) Intelligent Network to access to information in the Mobile Network,
- Fig. 3: illustrates a network arrangement for GSM 900/DCS 1800 wherein SSF are integrated in MSC and G-MSC,
- Fig. 4: schematically illustrates the access of the HLR via the CS1-INAP protocol,
- Fig. 5: shows a flow diagram illustrating Service Data function procedures in GSM PLMN and
- Fig. 6: illustrates a further embodiment for interconnection of network nodes or access to information.

### DETAILED DESCRIPTION OF THE INVENTION

In the following an embodiment is described wherein the Mobile Network applies the GSM-standard although it is clear that the arrangement according to the invention is not restricted to comply with the GSM-standard.

As a start, the nodes comprised by the GSM-system as specified by the ETSI-standards and the nodes comprised by the Intelligent Network as specified will be described.

It is also clear that the invention is not limited to any of the given standards referred to as far as the intelligent network IN is referred to either. The GSM-system comprises the a.o. following nodes: Home Location Register, HLR, Mobile Switching Center, MSC, Visitor Location Register, VLR and the Base Station Systems, BSS. These nodes will now be shortly described.

The Home Location Register,HLR, is a database which is used for the management of mobile subscribers, The number of them in a Public and Mobile Network, PLMN, varies according to the characteristics of the PLMN itself. The information which is stored in the HLR is generally of two basic types, namely subscription information and a part of the mobile location information allowing incoming calls to be routed to the Mobile Switching Center, MSC, for said Mobile. Administrative actions by the network operator on subscriber data are carried out in the Home Location Register, HLR. The Home Location Register, HLR, furthermore stores the identities which are essential to the system. These are the International Mobile Subscriber Identity, IMSI, the Mobile Station ISDN-number and the address of the Visitor Location Register, VLR, where the mobile subscriber currently is located.

The Mobile Switching Center, MSC, is a switching center that holds all the switching functions which are needed for mobiles located in an associated geographical area, also called an MSC-area. The Mobile Switching Center, MSC, takes into account the mobile nature of its subscribers and manages the necessary radio resources, especially those procedures which are required for handling and updating of the location registration and for carrying out the handover.

The Visitor Location Register, VLR, is a functional unit which dynamically stores subscriber information, e.g. location area when the subscriber is in the area of which that particular VLR is in charge. When a roaming mobile enters an MSC area, the MSC informs the associated VLR thereof. The mobile then enters the registration procedure wherein it is assigned a Mobile Subscriber Roaming Number MSRN, or a visited network address which serves to route incoming calls to that particular mobile. Furthermore, the VLR contains information which is needed for the handling of incoming/outgoing calls. This information is gathered by the VLR via a dialogue with the Home Location Register, HLR, which is associated with the Mobile Subscriber. Further information contained in the Visitor Location Register is temporary mobile subscriber identity if this is applicable, the location area in which the mobile has been registered and data related to supplementary service parameters.

Now Base Station System, BSS, will be shortly described. The BSS is the physical equipment which is used to give radio coverage to a determined geographical area called a cell and to comprise the equipment which is needed for communication with a mobile station. Functionally, the Base Station System, BSS, is subdivided into a control function which is carried out by a Base Station Controller, BSC, and a radio transmitting function which is carried out by the Base Transmitter Station, BTS.

The Intelligent Network is in the described embodiment specified by CCITT in the Q.1200 series and the ETSI-signalling protocols and switching, Intelligent Network Capability Set 1, Core Intelligent Network Application Protocol INAP, DE/SPS-3015 recommendations. As referred to above, however, the IN can also take other forms. CS-1 provides network capabilities to support services defined or in the process of being defined by ITU-T (former CCITT), such as e.g. Personal Communication Services, Freephone and Virtual Private Network Services such as Private Numbering plan and also capabilities to support the introduction of services which will not be standardized by ITU-T (former CCITT) and /or not be part of the proposed set of targeted services. In the reference just referred to ETSI defines a subset of the protocol defined in Q.1218.

The Intelligent Network comprises among others the following nodes: the Service Switching Point, SSP, the Service Control Point SCP and the Service Data Point SDP.

The Service Switching Point, SSP, contains detection capability to detect requests for IN-services. Furthermore, it contains capability to communicate with other physical entities which comprise a Service Control Function SCF. Such an entity could e.g. be a Service Control Point SCP. Furthermore, it responds to instructions from the other physical entity. Functionally, the Service Switching Point, SSP, comprises a Call Control Function, CCF, a Service Switching Function, SSF and, when the Service Switching Point, SSP, acts as a local exchange, a Call Control Agent Function, CCAF.

A further node of the intelligent network is the Service Control Point, SCP. This node comprises the Service Logic Programs, SLPs, which are used to provide Intelligent Network services or IN-services. It may or may not contain customer data. An SCP comprises Service Control Functions SCF, and may optionally comprise Service Data Functions SDF. The SCF can access data in SDF either directly or through a signalling network. The SDP can be in the SCP's own network or in another network. Multiple SCPs may contain the same SLPs and the same data to improve service reliability and to facilitate load sharing between different Service Control Points, SCPs.

The third node category of the Intelligent Network to be described is the Service Data Point, SDP. The Service Data Point comprises data used by Service Logic Programs, SLPs, to provide personalized or individualized services. Functionally, a Service Data Point comprises Service Data Functions, SDF. It can be accessed directly by a Service Control Function SCF, but also through the signalling network. In alternative embodiments it might also access other Service Data Points, SDPs, in its own as well as other networks.

For communication between different nodes, according to the illustrated embodiment the CCITT-signalling system No 7 is applied. For communication between mobile nodes a protocol, a Mobile Application Part, MAP, is applied, and for communication with nodes of the Intelligent Network, an extended Capability Set 1 Intelligent Network Application Part, INAP, protocol is applied, in the described embodiment it will in the following be called INAPX or INAPX' in a further embodiment. In the invention an extended or enhanced MAP is used, which in the described embodiment will be denoted X-MAP.

In fig. 2 an example of logic interconnection of the PLMN and IN-nodes is illustrated. If an incoming call from the Public Land Mobile Network, PLMN, or the Public Switched Telephone Network, PSTN or ISDN, (this is of course also possible although it will not be further described here) and has to be processed or treated by the Intelligent Network, the call will be routed to the Service Switching Point, SSP, wherein the Service Switching Functions, SSF, collect all the data that is necessary (from the IAM/IAI message Initial address Message/Initial address Informations) which may be indicated in a trigger table. The trigger table indicates the data items to be fetched and sent to SCF per trigger case. IAI is the call set-up message in the Telephone User Part TUP. IAM is the Integrated Services User Part message sent at call set-up).

The data is then forwarded by the SSF to the Service Control Point, SCP. The communication between the two nodes of the Intelligent Network, SSP and SCP is provided by the Intelligent Network Application Part, INAPX protocol which is an extended INAP protocol. The signalling system No 7 is used. An interpretation is carried out by a Service Logic Program, SLP. If needed, the Service Control Functions, SCF, inquire the Mobile Network or the PLMN on data on mobile subscribers, e t c. This will be further discussed later on. The communication between the Service Control Point comprising the Service Control Functions, SCF of the Intelligent Network, IN and the Mobile Network, generally MN, or in the particular case, the PLMN, is provided by the extended interconnecting protocol, the Intelligent Network Application Part X, INAP X. As above, the Signalling System No 7 is applied. The node in question of the Mobile Network (or particularly the PLMN) is the Home Location Register, HLR, Service Data Point, SDP, which comprises Service Data Functions, SDF, and a Home Location Register database. If mobile data is required, the HLR/SDP may require data from the second node of the Mobile Network, the Mobile Switching Center/Visitor Location Register, MSC/VLR. This node also comprises Service Data Functions and a Mobile Switching Center/Visitor Location Register, MSC/VLR database. The communication between the two logical nodes, HLR/SDP and MSC/VLR in the mobile network is provided by a first (intra)connecting protocol, the Extended (Enhanced) Mobile Application Part, X-MAP. When the Service Control Functions, SCF, of the Service Control Point, SCP, of the Intelligent Network have received the required data, the Service Control Functions, SCF, continue with Service Interpretation and Execution. The HPLMN is then seen as a Service Data Point, SDP, from the Service Control Point, SCP point of view. HPLMN comprises Home Location Register HLR and MSC/VLR. Data that may be requested by SCF from HLR and by HLR from MSC/VLR is e.g. the Location Number and the Call Delivery Information. The Location Number is a number defined in MSC/VLR assigned for a certain area, e.g. a cell, a group of cells or one or more location areas. The Call Delivery Information indicates to the SCP the probable outcome of a call delivery attempt from IN. The reason for a specific call delivery outcome is provided.
This will be more thoroughly discussed later on.

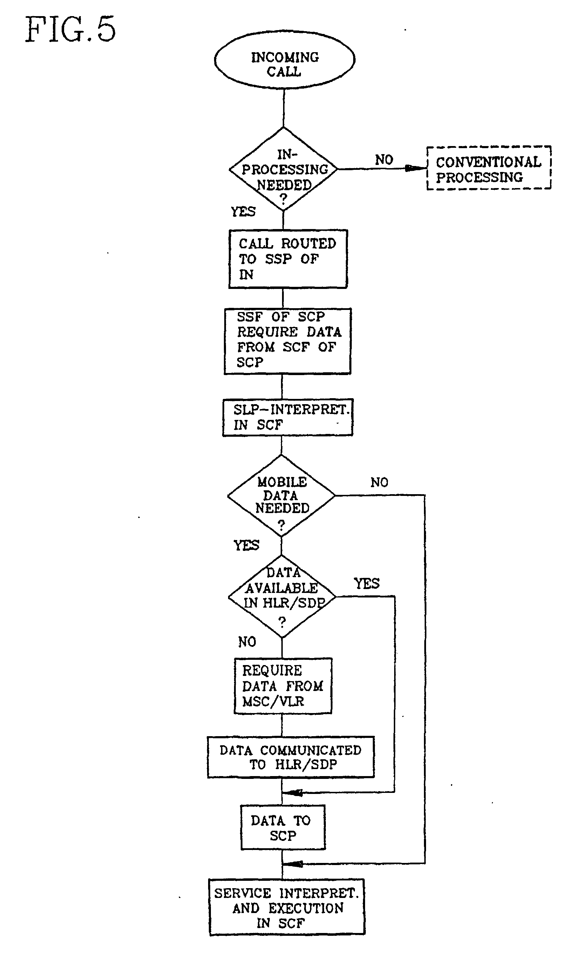

Fig. 5 shows a flow diagram on a global procedure. The Home Location Register, HLR, receives a service request from The Service Control Point, SCP, of the Intelligent Network. When the Home Location Register, HLR, has received the request, it determines if an interrogation to the Mobile Switching Centres/Visitor Location Register, MSC/VLR, has to be done. If no information is required from the MSC/VLR, the Home Location Register, HLR returns the information requested by the SCP of the intelligent network or the concerned error.

If, however, information has to be provided by the MSC/VLR, the Home Location Register, HLR, determines the International Mobile Station Identity, IMSI-code as well as the Visitor Location Register, VLR, address of the received Mobile Station Integrated Services Digital Network, or the MSISDN. The Home Location Register, HLR, then sends the appropriate message to the correct MSC/VLR. This is only done if the MSC/VLR supports the protocol. When the MSC/VLR has received a request from the Home Location Register, HLR, it determines which kind of data has to be fetched from the Visitor Location Register database and eventually from the call handler in the Mobile Switching Center, MSC. The search key received in the MSC/VLR is the IMSI-code. When the Home Location Register, HLR, receives a result or an error from the concerned MSC/VLR, it maps the received information into the corresponding result or error which is communicated to the interrogating Service Control Point, SCP, of the Intelligent Network IN.

In the particular embodiment, the general requirements on HLR and MSC/VLR respectively will essentially be the following:
On HLR:
The extended CS1 INAPX protocol which will be more thoroughly described below is implemented in HLR.

It is further possible to limit the number of processed information requests per time interval in HLR. It is assumed sufficient to do this with fixed parameter settings. If the limit is reached an error indication will be sent to SCP.

The Extended MAP protocol X-MAP as further described below is implemented in HLR.

Furthermore the handling of a combined request is handled as described above and HLR does not initiate the X-MAP operation towards MSC/VLR unless MSC/VLR supports the protocol.

The requirements on MSC/VLR are firstly that the X-MAP protocol as further specified below is implemented in MSC/VLR wherein further the handling of a combined request is described.

In the following the functioning of the HLR in the case of a Location Number request will be discussed.

Further below also a call delivery information request will be described in detail. The invention is of course not limited to these data as well as it is not limited to calls, neither incoming nor outgoing, but transfer of information should be possible at any time. However, upon reception of a request for provision of the Location Number, HLR analyses the received MSISDN.
If the MSISDN is unknown in HLR, the corresponding indication is returned to the SCP. Otherwise HLR determines the IMSI and the VLR address. If the VLR address is not available, the corresponding indication is returned to SCP, otherwise HLR requests the Location Number from MSC/VLR.
If the IMSI and the VLR address are available, HLR will issue a message towards the concerned MSC/VLR with the IMSI as search key in MSC/VLR and request the Location Number for the concerned IMSI.

A received Location Number is forwarded to the SCP in reply to the requested information. An error indication received from MSC/VLR will be mapped to the corresponding CS1 error and sent to the SCP.

The functioning of the MSC/VLR when a Location Number is requested is the following:
Upon reception of a request for provision of the Location Number, MSC/VLR fetches the Location Number based on the known location of the subscriber. If the subscriber is unknown in MSC/VLR, a new application parameter indicates whether a so called default Location Number - is to be returned or the corresponding X-MAP error. The provision of the Location Number is independent of the state of the subscriber.

In the following the particular requirements on and functioning of HLR and MSC/VLR respectively will be discussed in relation to a Call Delivery Information request.

Requirements on and functioning of HLR:
Upon reception of a request for Call Delivery Information HLR looks for the subscriber data related to the MSISDN number received. Analog checks are performed as if HLR would have been asked to provide routing information. For example ISDN Bearer Capability ISDN-BC, High Layer Capability HLC, Low Layer Capability LLC, Closed User Group CUG-Checkinfo and the number of forwardings may be received together with the MSISDN number. Only one Bearer Capability may be received.

If the received MSISDN is the main MSISDN and no BSC (Bearer Service Code) can be derived from the received information, HLR uses the Telephony BSC. The BSC, the number of forwardings and the CUG information are sent in a possible request for Call Delivery Information to MSC/VLR.

SDF-HLR error situations are mapped to the corresponding CS1 errors.

If the result of the checks is that neither routing information nor forwarding information would be delivered to GMSC, the result "call will not be delivered" is returned to the SCP. For SDF-HLR forwarding situations, the result "call will be forwarded" together with a forwarding reason will be delivered.

When the result of the analysis is that a provide roaming number operation would be invoked, a Call Delivery Information request is sent to MSC/VLR. In case MSC/VLR responds with "absent subscriber" the HLR continues the analysis in the same way as when "absent subscriber" is returned in the provide roaming number operation. If a Call Delivery Information result is received from MSC/VLR it is passed to the SCP. For other error causes than "absent subscriber" HLR performs the mapping to CS1 errors.

For all cases except for Single Personal Number which is an optional extra Service not defined in the GSM-standard, HLR analyses the forwarded - to number to check if it is a service number requiring suppression of announcement. The corresponding information is returned to the SCP.

The functions of the MSC/VLR in the case of a Call Delivery Information request will now be shortly described.

Upon reception of a request for Call Delivery Information MSC/VLR identifies the subscriber by means of the IMSI-code.

If the MSC/VLR does not support the basic service indicated in the Call Delivery Information request, the corresponding error is returned.

If the MSC/VLR does not identify the IMSI of the subscriber MSC/VLR responds to the HLR according to an application parameter as referred to above when discussing the functioning of MSC/VLR in relation to a Location Number request. Either the result "call will be delivered" or an error indication is returned to HLR. This procedure differs from the ordinary procedures for the roaming number provision in MSC/VLR.

If the MSC/VLR finds that the identified mobile subscriber is marked detached then MSC/VLR responds with "absent subscriber" if so indicated by e.g. an exchange parameter for roaming number provision. Otherwise MSC/VLR performs analogue checks as for the handling of incoming calls with the corresponding information as provided in the Call Delivery Information request from HLR. If the number of forwardings is not included, it is assumed that the number of forwardings is equal to zero.

If the subscriber is idle the result "call will be delivered" is returned to HLR.

If the result of the checks is that the call will be offered to a busy MS, the result "call will be delivered" is returned to HLR.

If the result of these checks is that the call will be forwarded before paging, the result "call will be forwarded" with the appropriate reason is returned to HLR. The forwarded-to number is not checked by MSC/VLR. The originating IN category has no impact on the logic. This is also an extra optional service which is not defined in GSM. This service triggers when calls are to be routed to the IN.

If the result of these checks is that the call will neither be forwarded before paging nor offered to the subscriber, the result "call will not be delivered" with the corresponding reason is returned to HLR.

The subscriber shall also be considered idle if location updating, paging, fetching of triplets, roaming number provision, storing of MS data or disconnection are going on in MSC/VLR.

In a particularly advantageous embodiment the first signalling protocol, i.e. the Extended (Enhanced) Mobile Application Part, X-MAP, provides communication between the second logical node MSC/VLR of the Mobile Network and the first logical node, HLR of the Mobile Network. The first interconnecting means or the second signalling protocol provides communication between the Intelligent Network and the Mobile Network, in this case between the first logical node or the Service Control Point of the Intelligent Network (M-SCP) and the first logical node or the MN-node of the Mobile Network, i.e. the Home Location Register/Service Data Point, HLR/SDP.

These protocols, X-MAP and INAPX are used to request e.g. either the Location Number, the Call Delivery Information or both for a particular subscriber. Separate and different protocols are in the described embodiment used for communication between HLR and SCP and between HLR and MSC/VLR respectively. One reason for using separate protocols is that some data which is related to the subscriber is only stored in MSC/VLR, such as e.g. location area, cell and call status information.

In the following the application of the SCP-HLR protocol or the INAPX is somewhat evaluated.

One aim of the implementation of the extended CS-1-INAPX protocol between the IN and the MN (GSM) network is to allow the transfer of information for call delivery from the GSM network in this particular embodiment towards the IN network.

The retrieved data might be used in the IN network to decide whether or not to set up a call to a certain mobile subscriber.

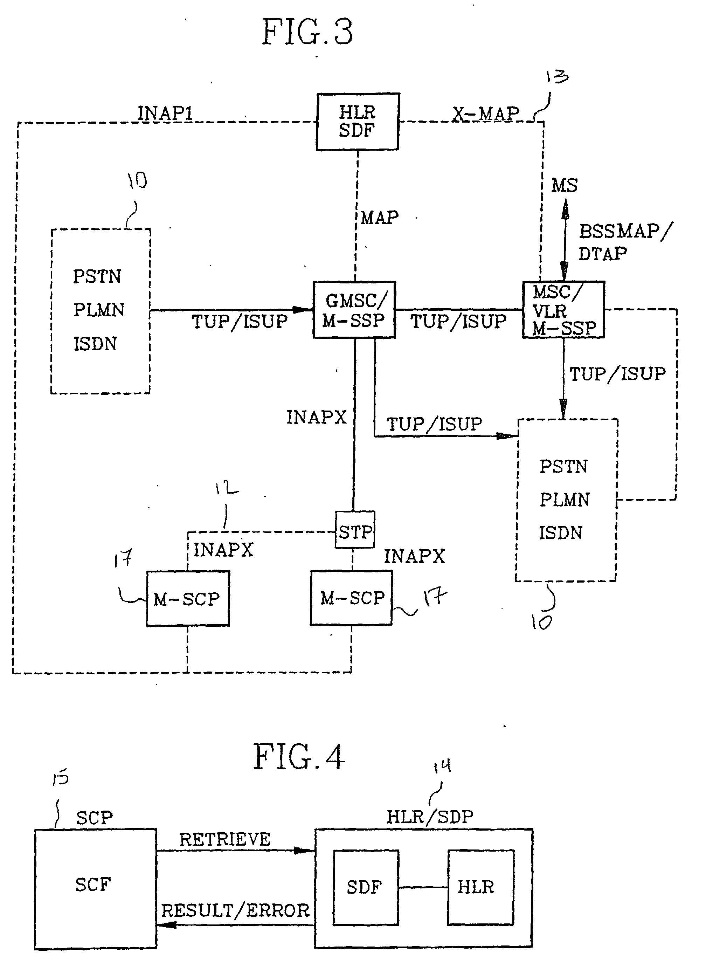

Particularly the IN network will access the HLR via the CS1-INAPX protocol. The PLMN network is seen as an external database by the IN network. The HLR is the access point that collects all the requested data and sends it over the CS1 protocol to the SCF. This is schematically illustrated in Fig. 4.

The Capability Set 1, CS-1, as referred to above defines an initial subset of IN capabilities. It provides network capabilities to support services which are or will be defined by ITU-T (former CCITT) (e.g. Universal Personal Telecommunication Service, Freephone, and Virtual Private Network Services such as Private Number Plan). CS-1 also provides capabilities to support the introduction of services that may neither be standardized, by CCITT (ITU-T), nor be part of the proposed set of the targeted services as already discussed above.

The SDF contains customer and network data for real time access by the SCF in the execution of an IN provided service. It interfaces with SCFs as required.
The SDF further contains data relating to the provision or operation of IN provided services, c.f. ITU-T Q.12XX, "Q-Series Intelligent Network Recommendations."

The SCF commands call control functions in the processing of IN provided and/or custom service requests and it may interact with other functional entities to access additional logic or to obtain service or user data information required to process a call/service logic instance, c.f. the in the foregoing mentioned reference.

As discussed above, the Location Number and the call Delivery Information can be retrieved from the GSM PLMN wherein the Location number indicates the location of a mobile subscriber in the MSC/VLR and wherein the Call Delivery Information indicates the possible outcome of a call to that mobile subscriber. The results can be either that the call will be delivered or that the call will be forwarded (describing the reason) or that the call will not be delivered (describing the reason).

It is, as mentioned above, possible to retrieve the Location Number the Call Delivery Information or both informations in one and the same request,

The protocols for the interface between SCP and HLR are in the described embodiment TCAP on SCCP and MTP of Signalling System No. 7.

Particularly a spare Subsystem Number may be assigned to the HLR-SDF application for INAP. In the described embodiment it is also possible to select the SSN per Application (IN Network with the cooperating HPLMN) in the HLR and the SCF, as application parameters.
In a particular embodiment it is e.g. possible to address the HLR-SDF using the MSISDN as global title.
Preferably the interface complies with the data retrieval operation as described in the CS1-INAP specification.

In the described embodiment only data for one subscriber can be retrieved in one operation but in other embodiments it is possible to retrieve data for more than one person in an operation and particularly it is also possible to update data for one subscriber.

Since the existing specification of the data retrieval operation does not contain all the necessary data to support the functionality of the invention new local Attribute Types are assigned for, such as MSISDN, CUG-Check info (Closed User Group), Network SignalInfo, Number of Forwarding, Location Number and Call Delivery Information.

The format and coding of the MSISDN, CUG-Check Info, Network Signal Info and the Number of Forwarding is particularly defined as specified in GSM TS 09.02.

Preferably the Call Delivery Information includes one of the following reasons:
The call will be delivered, or the call will be forwarded including one of the following reasons:
   - Call Forwarding Unconditional CFU is active-operative and announcement suppression applies
   - CFU is active-operative and no announcement suppression applies
   - Call Forwarding on Busy CFB is active-operative and announcement suppression applies
   - CFB is active-operative and no announcement suppression applies
   - Call Forwarding on not reachable CFNRc is active-operative and announcement suppression applies
   - CFNRc is active-operative and no announcement suppression applies
   - Single Personal Number SPN is active-operative (this stands for single personal member which is a supplementary service specified) or
the call will not be delivered including one of the following reasons:
   - The subscriber is busy.
   - The subscriber is barred.
   - The subscriber is not reachable.
   - The maximum number of forwardings has been exceeded.
   - CUG-Reject
   - Subscription violation. Either Bearer Service or Teleservice not provisioned.
   - Any other reason not specified above.

The local Attribute Types that are needed to retrieve the different data are for Location Information the MSISDN number and for the Call Delivery Information the MSISDN number. CUG-Checkinfo, Networksignalinfo and Numberofforwarding are optional.

Timer values are operator defined within the range specified in CS1-INAP specification.

Upon failure to retrieve the information correctly, in the particular embodiment, one of the following errors is returned to SCF upon:
Attribute Error, which indicates that an attribute given in the request is invalid or ambiguous. If none of the attributes explicitly listed in selection can be returned, then Attribute Error with "problem: no such Attribute or value" is reported.

Name Error which indicates that the name used to access the data item is invalid or finally Service Error which indicates that the SDF database could not be accessed or could not perform the operation requested, because for instance VLR could not provide the requested information.

The error returned is the one encountered which has the highest priority, the priorities of the errors being the following: Name Error, Attribute Error and Service Error.

The above mentioned error cases relate to error cases which are sent as INAP errors on the SDF operations used. The coding of the errors shall be defined as specified in CS1-INAP specification, as in accordance with GSM TS 09.02. The data retrieval INAP-operation is as already described used between the Service Control Point SCP and the Home Location Register, HLR. With the invention a number of generic attributes not foreseen in the recommendations are expanded and defined for mobile specific data. The data which is sent from the SCP to the HLR in the format specified in the GSM TS 09.02 is the Mobile Station ISDN-number, the Closed User Group check information or CUG-check-info which is a GSM-specified supplementary service, the Network Signal Information and a Number of Forwarding. In response the Service Control Point, SCP, may e.g. get, as already discussed, the Location Number and/or Call Delivery Information.

If, however, an error occurs, the corresponding reason is sent, according to the recommendations for the data retrieval operation, to the Service Control Point, SCP. The Mobile Data Location Number and Call Delivery Information are inherent to the Mobile Network. The location number is defined as a number defined in MSC/VLR assigned by the operator for a certain area (which as already explained can be one cell, a group of cells or one or several location areas). The format of the location number should be defined as specified in CCITT-Q.763 (white book). The Call Delivery Information thus indicates to the Service Control Point, SCP, the probable outcome of a call delivery attempt from the Intelligent Network, IN as well as the reason for a specific call delivery outcome is provided.

A timer value assigned to this operation appropriately operator defined within a range as specified in the CS1-INAP specification.

Call Delivery Information from MSC/VLR to HLR is similar to call Delivery Information from HLR to SCP but it is not identical. E.g. is some post-processing done in HLR.

In the following the HLR-MSC/VLR protocol or the Mobile Application Part X-MAP will be discussed. Particularly, in an advantageous embodiment, an Extended or Enhanced Mobile Application Part is used, X-MAP. Whenever the HLR receives a request from the IN network to retrieve e.g. call delivery information and if the requested information is not stored in HLR, HLR will retrieve the data from MSC/VLR and return it to SCF.

The aim of this requirement is to allow HLR to retrieve information requested for the IN network not stored in HLR from MSC/VLR.

The interface between HLR and MSC/VLR is the extended MAP protocol, i.e. X-MAP.

Once the information is fetched, it is transferred to SCF.

The retrieved data might be used in the IN network, for example, to decide whether or not to set up a call to a certain GSM subscriber.

As already mentioned above the Location Number is a number defined in MSC/VLR assigned for a certain area, which can be one cell, a group of cells or one or several location areas.
The SDF interfaces with SCFs as required.

In the SDF data is contained which relates to the provision or operation of IN provided services.

A new X-MAP operation, called Retrieve Info for IN, between HLR and MSC/VLR, is introduced to retrieve information not stored in HLR, for GSM subscribers such as for example the Location Number and the Call Delivery Information separately or in one and the same request.

The requirements on MSC/VLR and HLR respectively have already been defined above. - The parameters which are necessary to retrieve the information are: the IMSI-number as a mandatory parameter which is relevant for the Location Information and for the Call Delivery information: the IMSI-number as a mandatory parameter, CUG-check-info, Basic Service Code and Number of Forwarding as optional parameters. Location Information as well as call Delivery information can be retrieved in one and the same request for a particular subscriber. If both the Location Number and the Call Delivery Information is requested and only one of them is available, that one will be returned to the HLR. This does not cause an operational error. The format in coding of the IMSI, CUG-check-info, Basic Service Code and Number of Forwarding is defined and specified in GSM TS 09.02.

The format and coding of the location number shall be defined as specified in CCITT Rec. Q.763 (white book).

The Call Delivery Information includes either the result that the call will be delivered, or the result that the call will be forwarded including one of the following reasons:
CFB is active-operative,
CFNRc is active-operative or
SPN is active-operative, or finally that the call will not be delivered including one of the following reasons:
   The subscriber is busy,
   The subscriber is not reachable,
   The maximum number of forwardings has been, exceeded, CUG-Reject, Call Forwarding rejected because of CUG violation or any other reason not specified above.

The following errors can be received as result to this operation: Absent Subscriber, Unidentified Subscriber, Data Missing, Facility Not Supported, Unexpected Data Value.

The error code values and applicability shall be in accordance with GSM TS 09.02.

The timer value assigned to this operation shall be operator defined within a range of 15-30 seconds.

The above mentioned relates to advantageous embodiments. A further number of different embodiments are of course also possible. In one aspect of the invention it relates to GSM Mobile Specific Intelligent Network Services. One of these services is the routing of a call to the nearest subscriber. The nearest subscriber is hereby understood as the current location and not the nearest subscriber line or nearest default location.

It relates to mobile IN-services that process the location information related to the eventually called subscriber before any through connection is offered or provided. For the use of a Service Logic Program, SLP, which looks for the nearest subscriber (fixed or mobile) to a particular calling subscriber (fixed/mobile) it is possible to calculate the relative distance. The location number of the eventually called subscriber is retrieved by the Service Control Point, SCP, from e.g. GSM PLMN. For example the eventually called subscriber could be the nearest taxi, the nearest repair car or similar. This is of course merely given as examples. The service can be reached by dialling a certain service number which is known by the service users.

A further service is routing of a call depending on the call delivery information which is provided by the GSM PLMN to the IN based on the eventually called subscriber. It further relates to IN-services that process the called delivery information related to the eventually called subscriber before any through connection is offered.

A service Logic Program SLP, monitors the call status of an eventually called subscriber with a given frequency or a given time interval. Via this Service Logic Program the calling subscriber can be informed or warned about the current status of the eventually called subscriber or the program can be used to establish a connection to the called subscriber once the eventually mobile subscriber is free or reachable. Particularly the call could be diverted to an announcement or to another destination specified by the subscriber of the service.

The eventually called subscriber referred to is particularly a Mobile Subscriber who wants to be reached by the calling subscriber even if he is busy or not reachable by the network. These services among others can now be provided since the Intelligent Network can request mobile data from the GSM PLMN. GSM PLMN is here merely given as an example. As already discussed above, these data comprise a Location Number and/or Call Delivery Information which is inherent to the Mobile Network.

In a network arrangement the actual status of a mobile subscriber and the current location thereof was not known to the Service Control Point, SCP, before the attempt of a call establishment. With this information the Intelligent Network is able to provide services specific for mobile subscribers, e.g. GSM-subscribers. At the same time the Mobile Network is seen as a Service Data Point, SDP, from the Intelligent Networks point of view.

Furthermore, with known network arrangements it has only been possible to route calls to the nearest mobile subscriber based on the identity or location information tied to the calling subscriber without having information on the location of the eventually called subscriber. With the present invention the location of a mobile subscriber is known by the Intelligent Network before any through connection.

In fig. 3 an example of a network arrangement according to the invention is illustrated. In this particular case it relates to GSM 900/DCS 1800. Continuous lines relates to bearer connections whereas dashed lines illustrate signalling. The Service Switching Functions are integrated into the Mobile Switching Centres, MSCs and GMSC. Therethrough the network resources can be used much more efficiently. It can furthermore be seen that a subscriber data exchange between the Home Location Register, HLR, and the Mobile Service Control Point, M-SCP, is effected via the interconnecting means, INAPX, or the first interconnecting means, which is a second signalling protocol different from the first signalling protocol X-MAP between a Home Location Register/Service Data Point, HLR/SDP and the Mobile Switching Center/Visitor Location Register, MSC/VLR, as discussed above in relation to Fig. 2. The second signalling protocol, or INAPX is used also for signalling within the Intelligent Network, i.e. between the Service Switching Point, SSP, and the Service Control Points, SCP. Calls may be incoming from PSTN, PLMN and ISDN, i.e. the Public Switched Telephone Network, the Public Land Mobile Network and the Integrated Services Digital Network and the Service Switching Point of the Intelligent Network is the logical node of the Intelligent Network for incoming calls.

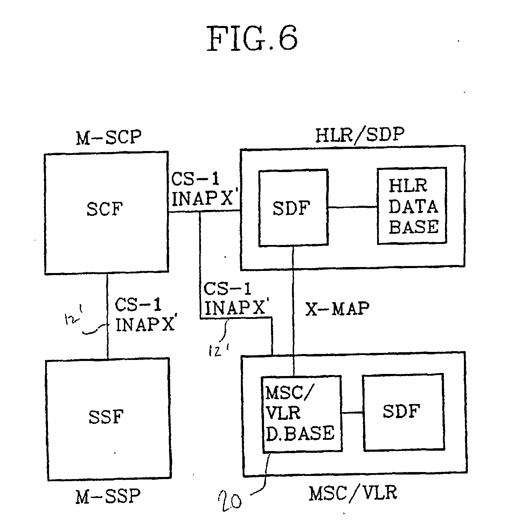

In an alternative embodiment an extended signalling protocol INAPX' also provides direct communication with MSC/VLR which comprises the Service Data Functions. This is illustrated in Fig. 6.

In an alternate embodiment the SCP can update data stored in the HLR and MSC/VLR via an INAP updating operation. Moreover, MSC/VLR may have an SDF functionality. Then the SCP has to retrieve the IMSI number and the VLR address from the HLR first by sending MSISDN. SCP shall thereby also retrieve subscriber and call status related to data in MSC/VLR through sending the IMSI number to MSC/VLR within the data retrieval operation of the INAP1. Therethrough any data available in MSC/VLR can be read by SCP. In a particular embodiment data can be updated in HLR (and MSC/VLR).

The invention shall of course not be limited to the shown embodiments but it can be varied in a number of different ways within the scope of the claims. E.g. may security aspects be considered and the HLR may for example be provided with the ability to verify that the requesting SCF is allowed to access subscriber data in HLR e.t.c.

## Claims

1. Intelligent mobile telecommunications network arrangement comprising means for providing communication within Mobile (10) and Intelligent Networks, respectively,
- said Mobile Network comprising a first logical node (14) and a second logical node (22),
- said Intelligent Network comprising a first logical node (17) and a second logical node (21),
- said means providing communication between said first and second first logical nodes (17, 21) of the Intelligent Network and said first logical node (14) of the Mobile Network, and comprising:
- first interconnecting means (11) providing communication between said first and second logical nodes (14; 22) of the Mobile Network,
- second interconnecting means (12, 12') separate from said interconnecting means for providing communication between said first logical node of the Mobile Network and said first logical node of the Intelligent Network,
**characterized in that**,
- the first logical Mobile Network node (14) is a Home Location Register (HLR) and Service Data Point (SDP), which comprises Service Data Functions (15),
- the first logical IN node is a Mobile Service Control Point (17),
- at least the two first nodes of the Intelligent and Mobile Networks, respectively, are inter-connected in such a way that subscriber data exchange is provided between said HLR and said Mobile Service Control Point (17),
- and said Mobile Network is seen as SDP from the Intelligent Network point of view:
- said first logical node (14) of said Mobile Network is adapted to request data from said second node (22) of the Mobile Network , comprising a Mobile Switching Centre/Visitor Location Register database (19), and a Service Control Functions (17) of the Mobile Service Control Point of the Intelligent Network is adapted to receive the required data in order to continue with Service interpretation and execution.

2. Arrangement according to claim 1,
**characterized in,**
**that** first interconnecting means (11) comprises a first signalling protocol and provides communication between a first and a second Mobile Network node.

3. Arrangement according to claim 2,
**characterized in,**
**that** the first signalling protocol is an Extended or Enhanced Mobile Application Part.

4. Arrangement according to any one of the preceding claims,
**characterized in,**
**that** the first interconnecting means (12; 12') comprises a second signalling protocol.

5. Arrangement according to claim 4,
**characterized in,**
**that** the second signalling protocol is an extended Intelligent Network Application Part (12; 12').

6. Arrangement according to anyone of the preceding claims,
**characterized in,**
**that** the second logical MN-node is a Mobile Switching Centre/Visitor Location Register.

7. Arrangement according to anyone of the preceding claims
**characterized in,**
**that** the second interconnecting means (12) is adapted to connect the first logical IN-node with the first logical MN-node.

8. Arrangement according to anyone of claims 1-7,
**characterized in,**
**that** the second interconnecting means, (12') is adapted to connect the first logical IN-node, with at least the second logical MN-node.

9. Arrangement according to any one of claims 1-8,
**characterized in,**
**that** the second interconnecting means, (12) also provide for signalling between the first logical IN-node (SCP) and a second logical IN-node.

10. Arrangement according to claim 9,
**characterized in,**
**that** the second logical IN-node is a Service Switching Point.

11. Arrangement according to anyone of the preceding claims,
**characterized in,**
**that** the Home Location Register (14) forming the first MN-node is adapted to act as a Service Data Point (14) towards the Service Control Point forming the first logical IN-node.

12. Arrangement according to claim 11,
**characterized in,**
**that** the Home Location Register which can be seen as a Service Data Point, i.e. HLR/SDP comprises Service Data Functions and a Home Location Register database.

13. Arrangement according to claim 6,
**characterized in,**
**that** the second logical MN-node comprises Service Data Functions, and a Mobile Switching Centre/Visitor Location Register-database.

14. Arrangement according to any one of the preceding claims,
**characterized in,**
**that** the Service Switching Functions are integrated in the Mobile Switching Centre/Visitor Location Register (19).

15. Arrangement according to any one of the preceding claims,
**characterized in,**
**that** furthermore the Public Switched Telephone Network, PSTN (10), is inter-connected logically with the Intelligent Network.

16. Arrangement according to any one of the preceding claims,
**characterized in,**
**that** the signalling protocols apply the CCITT-signalling system No. 7.

17. Arrangement according to any one of the preceding claims, **characterized in,**
**that** it is adapted to route the call to a Service Switching Point, wherein the Service Switching Functions (21) are adapted to collect data which is communicated to the Service Control Point (17) via the signalling protocol (12; 12').

18. Arrangement according to claim 17,
**characterized in,**
**that** the Service Control Functions request mobile data from PLMN via the Home Location Register/Service Data Point via the second signalling protocol (12).

19. Arrangement according to claim 18,
**characterized in,**
**that** the Home Location Register/Service Data Point (14) requests data from the Mobile Switching Centre/Visitor Location Register (22) database, said data being provided or communicated via the first signalling protocol, the extended Mobile Application Part.

20. Arrangement according to claim 17,
**characterized in,**
**that** the Service Control Functions request mobile data directly from MSC/VLR via the second signalling protocol (12').

21. Arrangement according to any one of the preceding claims, **characterized in,**
**that** the Mobile Network is the GSM-network.

22. Arrangement according to any one of the preceding claims,
**characterized in,**
**that** it comprises logical inter-connection of the Integrated Services Digital Network (10).

23. Arrangement according to any one of the preceding claims,
**characterized in,**
**that** the data requested by the Intelligent Network comprises data which is inherent to the network such as the Location number and/or Call Delivery Information.

24. Arrangement according to anyone of the preceding claims,
**characterized in,**
**that** data is adapted to be updated in HLR via the signalling protocol (12; 12').

25. Telecommunications system comprising an arrangement according to any of claims 1-24.

26. System according to claim 25,
**characterized in,**
**that** the first interconnecting means provides communication between the Home Location Register and a Mobile Switching Center/Visitor Location Register (22) of the mobile network wherein the first interconnecting means are different and separate from the second interconnecting means (12; 12').

27. Method for providing services, comprising Universal Personal Telecommunications Services (UPT-Services) in a Mobile Intelligent Network comprising the following steps:
examining if Intelligent Networking Processing is required; if yes, the method is **characterized by** the following steps:
- allowing said Mobile Network to be seen as Service Data Point from the Intelligent Network point of view:
- the incoming call is routed to a Mobile Service Switching Point of the Intelligent Network,
- the Service Switching Functions of the Mobile Service Switching Point collects relevant data,
- a first and a second Mobile Network Node, the first node being a Home Location Register HLR and Service Data Point SDP and the second node comprising a Mobile Switching Center/Visitor Location Register MSC/VLR database, communicate via a first signalling protocol (11)
- the Service Switching Functions communicate with another logical node of the Intelligent Network, the Mobile Service Control Point, MSCP via a second signalling protocol, an extended Intelligent Network Application Part (12)
- the MSCP communicates with said HLR and SDP via said second signalling protocol (12)
- the Service Logic Programme interprets the data
- the Service Control Functions requires data from the Mobile Network via the second signalling protocol, (12)
- the HLR and SDP in the Mobile Network require data from the MSC/VLR database, or at least part of the data is provided directly from MSC/VLR to MSCP via said second signalling protocol (12),
- the HLR and SDP providing the Service Control Functions of the Intelligent Network with at least some of the required data
- the Service Control Functions continue with service interpretation and execution.

## Patentansprüche

1. Anordnung eines intelligenten mobilen Telekommunikationsnetzwerks mit einer Einrichtung zum Bereitstellen einer Kommunikation von jeweils innerhalb mobilen (10) und intelligenten Netzwerken,
- wobei das mobile Netzwerk einen ersten logischen Knoten (14) und einen zweiten logischen Knoten (22) aufweist,
- wobei das intelligente Netzwerk einen ersten logischen Knoten (17) und einen zweiten logischen Knoten (21) aufweist,
- wobei die Einrichtung eine Kommunikation zwischen dem ersten und dem zweiten logischen Knoten (17, 21) des intelligenten Netzwerks und dem ersten logischen Knoten (14) des mobilen Netzwerks bereitstellt und folgendes aufweist:
- eine erste Verbindungseinrichtung (11), die eine Kommunikation zwischen dem ersten und dem zweiten logischen Knoten (14 - 22) des mobilen Netzwerks bereitstellt,
- eine zweite Verbindungseinrichtung (12, 12'), die getrennt von der ersten Verbindungseinrichtung ist, zum Bereitstellen einer Kommunikation zwischen dem ersten logischen Knoten des mobilen Netzwerks und dem ersten logischen Knoten des intelligenten Netzwerks,
**dadurch gekennzeichnet, dass**
- der erste logische Knoten (14) des mobilen Netzwerks eine Heimatdatei (HLR = Home Location Register) und eine Dienstdatenstelle (SDP = Service Data Point), die Dienstdatenfunktionen (15) aufweist, ist,
- der erste logische Knoten des intelligenten Netzwerks eine Mobilfunkdienststeuerstelle (17) ist,
- wenigstens die zwei ersten Knoten der intelligenten bzw. mobilen Netzwerke auf eine derartige Weise miteinander verbunden sind, dass ein Teilnehmerdatenaustausch zwischen der HLR und der Mobilfunkdienststeuerstelle (17) zur Verfügung gestellt wird, und das mobile Netzwerk vom intelligenten Netzwerk aus als SDP gesehen wird:
- der erste logische Knoten (14) des mobilen Netzwerks geeignet ist, Daten vom zweiten Knoten (22) des mobilen Netzwerks anzufragen, der eine Funkvermittlungsstellen/Besucherdatei-Datenbank (19) aufweist, und Dienststeuerfunktionen (17) der mobilen Dienststeuerstelle des intelligenten Netzwerks geeignet sind, die erforderlichen Daten zu empfangen, um mit einer Dienstinterpretation und -ausführung fortzufahren.

2. Anordnung nach Anspruch 1,
**dadurch gekennzeichnet,**
**dass** die erste Verbindungseinrichtung (11) ein erstes Signalgebungsprotokoll aufweist und eine Kommunikation zwischen einem ersten und einem zweiten Knoten des mobilen Netzwerks bereitstellt.

3. Anordnung nach Anspruch 2,
**dadurch gekennzeichnet,**
**dass** das erste Signalgebungsprotokoll ein erweiterter oder verbesserter Mobilfunk-Anwendungsteil ist.

4. Anordnung nach einem der vorangehenden Ansprüche,
**dadurch gekennzeichnet,**
**dass** die erste Verbindungseinrichtung (12; 12') ein zweites Signalgebungsprotokoll aufweist.

5. Anordnung nach Anspruch 4,
**dadurch gekennzeichnet,**
**dass** das zweite Signalgebungsprotokoll ein erweiterter Anwendungsteil des intelligenten Netzwerks (12; 12') ist.

6. Anordnung nach einem der vorangehenden Ansprüche,
**dadurch gekennzeichnet,**
**dass** der zweite logische Knoten des mobilen Netzwerks eine Funkvermittlungsstelle/Besucherdatei ist.

7. Anordnung nach einem der vorangehenden Ansprüche,
**dadurch gekennzeichnet,**
**dass** die zweite Verbindungseinrichtung (12) geeignet ist, den ersten logischen Knoten des intelligenten Netzwerks mit dem ersten logischen Knoten des mobilen Netzwerks zu verbinden.

8. Anordnung nach einem der Ansprüche 1 - 7,
**dadurch gekennzeichnet,**
**dass** die zweite Verbindungseinrichtung (12') geeignet ist, den ersten logischen IN-Knoten mit wenigstens dem zweiten logischen IN-Knoten zu verbinden.

9. Anordnung nach einem der Ansprüche 1 - 8,
**dadurch gekennzeichnet,**
**dass** die zweite Verbindungseinrichtung (12) auch eine Signalgebung zwischen dem ersten logischen IN-Knoten (SCP) und einem zweiten logischen IN-Knoten bereitstellt.

10. Anordnung nach Anspruch 9,
**dadurch gekennzeichnet,**
**dass** der zweite logische IN-Knoten eine Dienstvermittlungsstelle ist.

11. Anordnung nach einem der vorangehenden Ansprüche,
**dadurch gekennzeichnet,**
**dass** die Heimatdatei (14), die den ersten MN-Knoten bildet, dazu geeignet ist, als eine Dienstdatenstelle (14) in Richtung zu der Dienststeuerstelle zu wirken, die den ersten logischen IN-Knoten bildet.

12. Anordnung nach Anspruch 11,
**dadurch gekennzeichnet,**
**dass** die Heimatdatei, die als Dienstdatenstelle gesehen werden kann, d.h. als HLR/SDP, Dienstdatenfunktionen und eine Heimatdatei-Datenbank aufweist.

13. Anordnung nach Anspruch 6,
**dadurch gekennzeichnet,**
**dass** der zweite logische MN-Knoten Dienstdatenfunktionen aufweist, und eine Mobilfunkvermittlungsstellen/Besucherdatei-Datenbank.

14. Anordnung nach einem der vorangehenden Ansprüche,
**dadurch gekennzeichnet,**
**dass** die Dienstvermittlungsfunktionen in der Mobilfunkvermittlungsstelle/Besucherdatei (19) integriert sind.

15. Anordnung nach einem der vorangehenden Ansprüche,
**dadurch gekennzeichnet,**
**dass** weiterhin das öffentliche Fernsprechwählnetz PSTN (10) logisch mit dem intelligenten Netzwerk verbunden ist.

16. Anordnung nach einem der vorangehenden Ansprüche,
**dadurch gekennzeichnet,**
**dass** die Signalgebungsprotokolle das CCITT-Signalgebungssystem Nr. 7 anwenden.

17. Anordnung nach einem der vorangehenden Ansprüche,
**dadurch gekennzeichnet,**
**dass** sie geeignet ist, den Anruf zu einer Dienstvermittlungsstelle zu führen, wobei die Dienstvermittlungsfunktionen (21) geeignet sind, Daten zu sammeln, die über das Signalgebungsprotokoll (12; 12') zur Dienststeuerstelle (17) kommuniziert werden.

18. Anordnung nach Anspruch 17,
**dadurch gekennzeichnet,**
**dass** die Dienststeuerfunktionen Mobilfunkdaten vom PLMN über die Heimatdatei/Dienstdatenstelle über das zweite Signalgebungsprotokoll (12) anfragen.

19. Anordnung nach Anspruch 18,
**dadurch gekennzeichnet,**
**dass** die Heimatdatei/Dienstdatenstelle (14) Daten von der Mobilfunkvermittlungsstelle/Besucherdatei-(22)-Datenbank anfragt, wobei die Daten über das erste Signalgebungsprotokoll, nämlich den erweiterten Mobilfunk-Anwendungsteil, geliefert oder kommuniziert werden.

20. Anordnung nach Anspruch 17,
**dadurch gekennzeichnet,**
**dass** die Dienststeuerfunktionen Mobilfunkdaten direkt von der MSC/VLR über das zweite Signalgebungsprotokoll (12') anfragen.

21. Anordnung nach einem der vorangehenden Ansprüche,
**dadurch gekennzeichnet,**
**dass** das mobile Netzwerk das GSM-Netzwerk ist.

22. Anordnung nach einem der vorangehenden Ansprüche,
**dadurch gekennzeichnet,**
**dass** sie eine logische Verbindung des dienstintegrierten digitalen Netzwerks (10) aufweist.

23. Anordnung nach einem der vorangehenden Ansprüche,
**dadurch gekennzeichnet,**
**dass** die durch das intelligente Netzwerk angefragten Daten Daten aufweisen, die dem Netzwerk eigen sind, wie beispielsweise die Lokalisierungsnummer und/oder eine Anrufausgabeinformation.

24. Anordnung nach einem der vorangehenden Ansprüche,
**dadurch gekennzeichnet,**
**dass** Daten geeignet sind, in der HLR über das Signalgebungsprotokoll (12; 12') aktualisiert zu werden.

25. Telekommunikationssystem mit einer Anordnung nach einem der Ansprüche 1 - 24.

26. System nach Anspruch 25,
**dadurch gekennzeichnet,**
**dass** die erste Verbindungseinrichtung eine Kommunikation zwischen der Heimatdatei und einer Mobilfunkvermittlungsstelle/Besucherdatei (22) des mobilen Netzwerks bereitstellt, wobei die erste Verbindungseinrichtung unterschiedlich und getrennt von der zweiten Verbindungseinrichtung (12; 12') ist.

27. Verfahren zum Bereitstellen von Diensten mit universellen persönlichen Telekommunikationsdiensten (UPT-Diensten) in einem mobilen intelligenten Netzwerk mit den folgenden Schritten:
Untersuchen, ob eine intelligente Netzwerkverarbeitung erforderlich ist, wobei das Verfahren dann, wenn die Antwort ja ist, durch die folgenden Schritte **gekennzeichnet** ist:
- Zulassen, dass das mobile Netzwerk vom intelligenten Netzwerk aus als Dienstdatenstelle gesehen wird;
- der ankommende Anruf wird zu einer Mobilfunkdienstvermittlungsstelle des intelligenten Netzwerks geführt,
- die Dienstvermittlungsfunktionen der Mobilfunkdienstvermittlungsstelle sammeln relevante Daten,
- ein erster und ein zweiter Knoten des mobilen Netzwerks, wobei der erste Knoten eine Heimatdatei HLR und eine Dienstdatenstelle SDP ist und wobei der zweite Knoten eine Mobilfunkvermittlungsstelle/Besucherdatei-MSC/VLR-Datenbank aufweist, kommunizieren über ein erstes Signalgebungsprotokoll (11),
- die Dienstvermittlungsfunktionen kommunizieren mit einem weiteren logischen Knoten des intelligenten Netzwerks, nämlich der Mobilfunkdienststeuerstelle MSCP, über ein zweites Signalgebungsprotokoll, nämlich einen erweiterten intelligenten Netzwerkanwendungsteil (12),
- die MSCP mit der HLR und der SDP kommuniziert über das zweite Signalgebungsprotokoll (12),
- das Dienstlogikprogramm interpretiert die Daten,
- die Dienststeuerfunktionen fordern Daten vom mobilen Netzwerk über das zweite Signalgebungsprotokoll (12) an,
- HLR und SDP im mobilen Netzwerk fordern Daten von der MSC/VLR-Datenbank an, oder wenigstens ein Teil der Daten wird von MSC/VLR über das zweite Signalgebungsprotokoll (12) direkt zu MSCP geliefert,
- wobei die HLR und die SDP die Dienststeuerfunktionen des intelligenten Netzwerks mit wenigstens einigen der erforderlichen Daten bereitstellen bzw. liefern,
- die Dienststeuerfunktionen fahren mit einer Dienstinterpretation und -ausführung fort.

## Revendications

1. Structure de réseau de télécommunication mobile intelligent comprenant des moyens assurant la communication respectivement à l'intérieur de Réseaux Mobile (10) et Intelligent,
- le Réseau Mobile comprenant un premier noeud logique (14) et un second noeud logique (22),
- le Réseau Intelligent comprenant un premier noeud logique (17) et un second noeud logique (21),
- les moyens assurant la communication entre les premier et second noeuds logiques (17, 21) du Réseau Intelligent et le premier noeud logique (14) du Réseau Mobile, et comprenant :
- des premiers moyens d'interconnexion (11) assurant la communication entre les premier et second noeuds logiques (14; 22) du Réseau Mobile,
- des seconds moyens d'interconnexion (12, 12'), séparés des moyens d'interconnexion pour assurer la communication entre le premier noeud logique du Réseau Mobile et le premier noeud logique du Réseau Intelligent,
**caractérisée en ce que**,
- le premier noeud logique du Réseau Mobile (14) est un Enregistreur de Localisation Nominal (HLR) et un Point de Données de Service (SDP), qui comprend des Fonctions de Données de Service (15),
- le premier noeud logique du Réseau Intelligent est un Point de Commande de Service Mobile (17),
- au moins les deux premiers noeuds des Réseaux Intelligent et Mobile, respectivement, sont interconnectés de manière qu'un commutateur de données d'abonné soit placé entre le HLR et le Point de Commande de Service Mobile (17),
- et le Réseau Mobile est vu comme un SDP, du point de vue du Réseau Intelligent;
- le premier noeud logique (14) du Réseau Mobile est adapté pour demander des données au second noeud (22) du Réseau Mobile, comprenant une base de données de Centre de Commutation Mobile / Enregistreur de Localisation de Visiteurs (19), et une Fonction de Commande de Service (17) du Point de Commande de Service Mobile du Réseau Intelligent est adaptée pour recevoir les données demandées afin de poursuivre l'interprétation et l'exécution de Service.

2. Structure selon la revendication 1,
**caractérisée en ce que**,
les premiers moyens d'interconnexion (11) comprennent un premier protocole de signalisation et assurent la communication entre un premier et un second noeuds de Réseau Mobile.

3. Structure selon la revendication 2,
**caractérisée en ce que**
le premier protocole de signalisation est une Partie d'Application Mobile Etendue ou Améliorée (ou "Extended or Enhanced Mobile Application Part").

4. Structure selon l'une quelconque des revendications précédentes,
**caractérisée en ce que**
les premiers moyens d'interconnexion (12; 12') comprennent un second protocole de signalisation.

5. Structure selon la revendication 4,
**caractérisée en ce que**,
le second protocole de signalisation est une Partie d'Application de Réseau Intelligent (ou "Intelligent Network Application Part") étendue (12; 12').

6. Structure selon l'une quelconque des revendications précédentes,
**caractérisée en ce que**
le second noeud logique de Réseau Mobile est un Centre de Commutation Mobile / Enregistreur de Localisation de Visiteurs.

7. Structure selon l'une quelconque des revendications précédentes,
**caractérisée en ce que**,
les seconds moyens d'interconnexion (12) sont adaptés pour connecter le premier noeud logique de Réseau intelligent au premier noeud logique de Réseau Mobile.

8. Structure selon l'une quelconque des revendications 1 à 7,
**caractérisée en ce que**,
les seconds moyens d'interconnexion (12') sont adaptés pour connecter le premier noeud logique de Réseau Intelligent au moins au second noeud logique de Réseau Mobile.

9. Structure selon l'une quelconque des revendications 1 à 8,
**caractérisée en ce que**,
les seconds moyens d'interconnexion (12) assurent également la signalisation entre le premier noeud logique de Réseau Intelligent (SCP) et un second noeud logique de Réseau Intelligent.

10. Structure selon la revendication 9,
**caractérisée en ce que**,
le second noeud logique de Réseau Intelligent est un Point de Commutation de Service.

11. Structure selon l'une quelconque des revendications précédentes,
**caractérisée en ce que**,
l'Enregistreur de Localisation Nominal (14) formant le premier noeud de Réseau Mobile est adapté pour fonctionner comme un Point de Données de Service (14) vers le Point de Commande de Service formant le premier noeud logique de Réseau Intelligent.

12. Structure selon la revendication 11,
**caractérisée en ce que**,
l'Enregistreur de Localisation Nominal, qui peut être vu comme un Point de Données de Service, c'est-à-dire un HLR/SDP, comprend des Fonctions de Données de Service et une base de données d'Enregistreur de Localisation Nominal.

13. Structure selon la revendication 6,
**caractérisée en ce que**
le second noeud logique de Réseau Mobile comprend des Fonctions de Données de Service, et une base de données de Centre de Commutation Mobile / Enregistreur de Localisation de Visiteurs.

14. Structure selon l'une quelconque des revendications précédentes,
**caractérisée en ce que**,
les Fonctions de Commutation de Service sont intégrées dans le Centre de Commutation Mobile / Enregistreur de Localisation de Visiteurs (19).

15. Structure selon l'une quelconque des revendications précédentes,
**caractérisée en ce que**
le Réseau Téléphonique Commuté Public, RTCP (10), est en outre interconnecté au point de vue logique avec le Réseau Intelligent.

16. Structure selon l'une quelconque des revendications précédentes,
**caractérisée en ce que**,
les protocoles de signalisation appliquent le système de signalisation n° 7 du CCITT.

17. Structure selon l'une quelconque des revendications précédentes,
**caractérisée en ce que**,
elle est adaptée pour diriger l'appel vers un Point de Commutation de Service, les Fonctions de Commutation de Service (21) étant adaptées pour collecter des données qui sont communiquées au Point de Commande de Service (17) par l'intermédiaire du protocole de signalisation (12; 12').

18. Structure selon la revendication 17,
**caractérisée en ce que**,
les Fonctions de Commande de Service demandent des données de service mobile au Réseau Terrestre Mobile Public (PLMN) par l'intermédiaire de l'Enregistreur de Localisation Nominal / Point de Données de Service, au moyen du second protocole de signalisation (12).

19. Structure selon la revendication 18,
**caractérisée en ce que**,
l'Enregistreur de Localisation Nominal / Point de Données de Service (14) demande des données à la base de données de Centre de Commutation Mobile / Enregistreur de Localisation de Visiteurs (22), ces données étant fournies ou communiquées au moyen du premier protocole de signalisation, c'est-à-dire la Partie d'Application Mobile étendue.

20. Structure selon la revendication 17,
**caractérisée en ce que**,
les Fonctions de Commande de Service demandent des données de service mobile directement au Centre de Commutation Mobile / Enregistreur de Localisation de Visiteurs au moyen du second protocole de signalisation (12').

21. Structure selon l'une quelconque des revendications précédentes,
**caractérisée en ce que** le Réseau Mobile est le réseau GSM.

22. Structure selon l'une quelconque des revendications précédentes,
**caractérisée en ce que**,
elle comprend une interconnexion logique du Réseau Numérique à Intégration de Services (10).

23. Structure selon l'une quelconque des revendications précédentes,
**caractérisée en ce que**
les données demandées par le Réseau Intelligent comprennent des données qui sont inhérentes au réseau, comme le Numéro de Localisation et/ou l'Information d'Aboutissement d'Appel.

24. Structure selon l'une quelconque des revendications précédentes,
**caractérisée en ce que**,
les données sont adaptées pour être actualisées dans l'Enregistreur de Localisation Nominal au moyen du protocole de signalisation (12; 12').

25. Système de télécommunication comprenant une structure selon l'une quelconque des revendications 1 à 24.

26. Système selon la revendication 25,
**caractérisé en ce que**,
les premiers moyens d'interconnexion assurent la communication entre l'Enregistreur de Localisation Nominal et un Centre de Commutation Mobile / Enregistreur de Localisation de Visiteurs (22) du réseau mobile, les premiers moyens d'interconnexion étant différents et séparés des seconds moyens d'interconnexion (12; 12').

27. Procédé pour fournir des services, comprenant des Services de Télécommunication Personnels Universels (Services UPT ("Universal Personal Telecommunications")) dans un Réseau Intelligent Mobile, comprenant les étapes suivantes :
on examine si un Traitement de Réseau Intelligent est exigé;
si oui, le procédé est **caractérisé par** les étapes suivantes:
- on permet au Réseau Mobile d'être vu comme un Point de Données de Service du point de vue du Réseau Intelligent:
- l'appel entrant est dirigé vers un Point de Commutation de Service Mobile du Réseau Intelligent,
- les Fonctions de Commutation de Service du Point de Commutation de Service Mobile collectent des données pertinentes,
- un premier et un second Noeuds de Réseau Mobile, le premier noeud étant un Enregistreur de Localisation Nominal, HLR, et un Point de Données de Service, SDP, et le second noeud comprenant une base de données de Centre de Commutation Mobile / Enregistreur de Localisation de Visiteurs, MSC/VLR, communiquent au moyen d'un premier protocole de signalisation (11)
- les Fonctions de Commutation de Service communiquent avec un autre noeud logique du Réseau Intelligent, le Point de Commande de Service Mobile, MSCP, au moyen d'un second protocole de signalisation, une Partie d'Application de Réseau Intelligent étendue (12),
- le Point de Commande de Service Mobile communique avec le HLR et le SDP au moyen du second protocole de signalisation (12),
- le Programme Logique de Service interprète les données,
- les Fonctions de Commande de Service demandent des données au Réseau Mobile au moyen du second protocole de signalisation (12),
- le HLR et le SDP dans le Réseau Mobile demandent des données à la base de données de MSC/VLR, ou bien au moins une partie des données est fournie directement par le MSC/VLR au MSCP au moyen du second protocole de signalisation (12),
- le HLR et le SDP fournissent aux Fonctions de Commande de Service du Réseau Intelligent certaines au moins des données demandées,
- les Fonctions de Commande de Service poursuivent l'interprétation et l'exécution du service.
